# EUROPÄISCHE PATENTSCHRIFT

(11) **EP 1 161 910 B1**
(45) Veröffentlichungstag und Bekanntmachung des Hinweises auf die Patenterteilung: **04.02.2004**
(21) Anmeldenummer: 01113198.4
(22) Anmeldetag: 30.05.2001
(51) Int. Cl.: A47J 27/21

(54) **Elektrisches Haushaltsgerät, insbesondere Wasserkocher**
Electrical household appliance, in particular a water boiler
Appareil domestique électrique, en particulier une bouilloire

(30) Priorität: 09.06.2000 DE 10038634
(43) Veröffentlichungstag der Anmeldung: 12.12.2001
(73) Patentinhaber: BSH Bosch und Siemens Hausgeräte GmbH, 81739 München (DE)
(72) Erfinder: Obermaier, Markus Dipl.-Ing., 83365 Nussdorf (DE); Kramer, Siegmund, 83417 Kirchanschöring (DE); Magg, Johannes Dipl.-Ing, 83368 St. Georgen (DE)

(56) Entgegenhaltungen:
- EP-A- 0 254 482
- DE-C- 19 830 181
- GB-A- 2 318 926

## Beschreibung

Die Erfindung betrifft ein elektrisches Haushaltsgerät, insbesondere Wasserkocher, nach dem Oberbegriff des Patentanspruchs 1.

Die aus der Praxis bekannten üblichen Wasserkocher weisen ein Sockelteil und ein von dem Sockelteil abnehmbares Oberteil auf, wobei das Sockelteil und das Oberteil eine Kontakteinrichtung aus jeweils einem Kontaktelement aufweisen, die im zusammengesetzen Zustand miteinander elektrisch kontaktierbar sind. Bei den meisten bekannten Wasserkochern ist die Kontakteinrichtung so angeordnet, daß das Oberteil nur in einer ganz speziellen Ausrichtung zum Sockelteil auf das Sockelteil aufsetzbar ist, wodurch der Bedienungskomfort erheblich eingeschränkt wird.

Um den Bedienungskomfort zu erhöhen, wurden elektrische Haushaltsgeräte entwickelt, bei denen Oberteil und Sockelteil stufenlos aufeinandersetzbar sind. Ein solches gattungsgemäßes elektrisches Haushaltsgerät ist in einer einfachen Ausführung beispielsweise aus der GB 2 318 926 A und in einer etwas aufwendigeren Ausführung aus der WO 99/48333 bekannt. Bei dem letztgenannten Haushaltsgerät weist das Sockelteil mehrere Gegengewichte auf, die beim Aufsetzen des Oberteils auf das Sockelteil einen Hebelmechanismus betätigen, über den das Kontaktelement des Sockelteils in Kontakt mit dem Oberteil gebracht wird. Zwar ermöglicht diese bekannte Konstruktion ein stufenloses Aufsetzen des Oberteils, jedoch ist der zur Kontaktierung verwendete Hebelmechanismus fertigungstechnisch sehr aufwendig und somit teuer. Darüber hinaus ist ein solcher Hebelmechanismus äußerst störanfällig und nicht sehr wartungsfreundlich.

Ausgehend von diesem Stand der Technik liegt der Erfindung die Aufgabe zugrunde, ein elektrisches Haushaltsgerät der eingangs beschriebenen Art so weiterzubilden, daß bei einfachem Aufbau und kostengünstiger Fertigung eine Mehrfachkontaktierung möglich ist.

Die Aufgabenstellung wird erfindungsgemäß durch die im Patentanspruch 1 genannten Merkmale gelöst.

Durch das Vorsehen einer Kontakteinrichtung, bei der im Sockelteil mehrere paarweise angeordnete Aufnahmeöffnungen und zwei Kontaktstifte an der Unterseite des Oberteils angeordnet sind, die zur elektrischen Kontaktierung in ein Paar Aufnahmeöffnungen eingesetzt werden, ist eine besondere einfache und damit kostengünstige Herstellung der Kontakteinrichtung am elektrischen Haushaltsgerät möglich.

Gemäß einer weiteren vorteilhaften Ausführungsform der Erfindung sind die paarweise angeordneten Aufnahmeöffnungen auf konzentrischen Kreisen um einen Mittelkontakt ausgebildet. Diese Anordnung der Aufnahmeöffnungen auf konzentrischen Kreisen erleichtert dem Benutzer das Aufstellen des Oberteils auf das Sockelteil, da es lediglich notwendig ist, Oberteil und/oder Sockelteil zueinander zu verdrehen, um einfach und schnell zur nächstliegenden Kontaktierposition zu gelangen, in der die Kontaktstifte des Oberteils Aufnahme in den Aufnahmeöffnungen des Sockelteils finden.

Während die paarweise Ausbildung der Aufnahmeöffnungen dazu dient, immer für beide Pole der Netzspannung eine Kontaktaufnahme bereitzustellen, ist der Mittelkontakt erfindungsgemäß als Schutzleiterkontakt ausgebildet.

Um die elektrische Kontaktierung beim Einsetzen der Kontaktstifte in die Aufnahmeöffnungen zu vereinfachen, wird erfindungsgemäß vorgeschlagen, daß die unterhalb der Aufnahmeöffnungen angeordneten Kontaktflächen als ringförmige Kontaktbahnen ausgebildet sind. Wegen der Anordnung der Aufnahmeöffnungen auf konzentrischen Kreisen, können auch die Kontaktflächen einfach und kostengünstig als jeweils einstückige Kreisbahnen ausgebildet werden, wodurch der Verdrahtungsaufwand deutlich reduziert wird.

Die Kontaktierung zwischen den Kontaktflächen des Sockelteils und den in die Aufnahmeöffnungen eingesteckten Kontaktstiften des Oberteils kann dadurch verbessert werden, daß die Kontaktflächen derart federnd gelagert sind, daß sie gegen die eintauchenden Kontaktstifte des Oberteils drücken. Selbst wenn die Kontaktstifte beispielsweise wegen einer Verschmutzung der Oberseite des Sockelteils nicht mit ihrer vollen Länge in die Aufnahmeöffnungen eintauchen können, wird so durch die federnd nach oben gedrückten Kontaktflächen ein Kontakt mit den Kontaktstiften ermöglicht.

Um sicherzustellen, daß das Oberteil nur in solchen Positionen fest auf das Sockelteil aufsetzbar ist, in denen auch eine elektrische Kontaktierung zwischen Sockelteil und Oberteil stattfindet, wird erfindungsgemäß schließlich vorgeschlagen, daß konzentrisch um den Mittelkontakt Führungs- und Rastelemente angeordnet sind, die mit entsprechenden Führungs- und Rastelementen an der Unterseite des Oberteils korrespondieren. Die Führungs- und Rastelemente bewirken somit eine Ausrichtung von Oberteil und Sockelteil zueinander, und zwar derart, daß das Oberteil ausschließlich in solchen Positionen auf das Sockelteil aufsetzbar ist, in denen auch gleichzeitig eine elektrische Kontaktierung zwischen den beiden Teilen erfolgt.

Weitere Merkmale und Vorteile der Erfindung ergeben sich aus der nachfolgenden Beschreibung der zugehörigen Zeichnungen. Es zeigen
- Fig. 1: schematisch eine Schnittdarstellung in Seitenansicht eines Wasserkochers;
- Fig. 2: schematisch eine Draufsicht auf ein erfindungsgemäß ausgebildete Bodenplatte des Wasserkochers; und
- Fig. 3: schematisch eine Draufsicht auf ein erfindungsgemäß ausgebildetes Sockelteil des Wasserkochers.

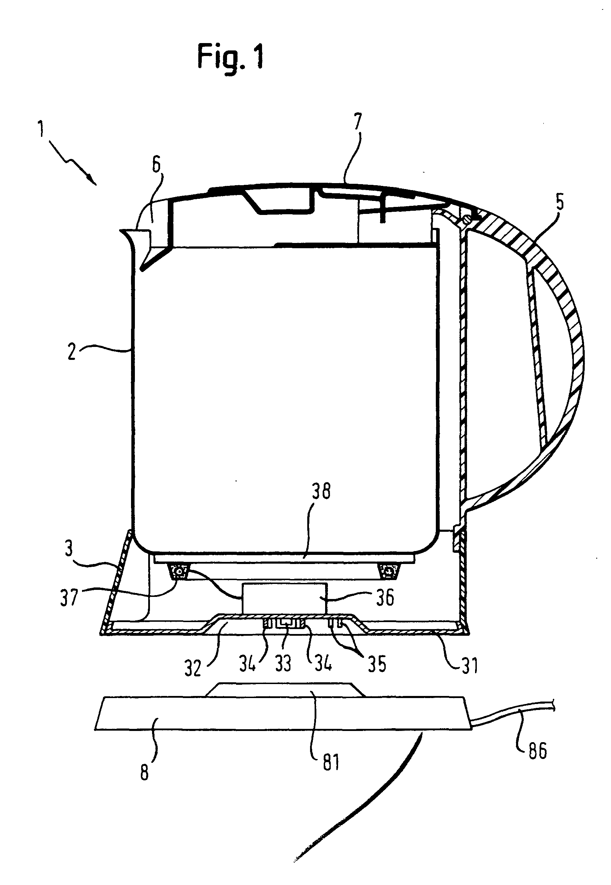

Ein Wasserkocher 1 , wie er in Fig. 1 gezeigt ist, weist einen Edelstahltopf 2 auf, in dessen Bodenbereich ein Bodengehäuse 3 aus dem temperaturbeständigen Kunststoff befestigt ist. An dieses Bodengehäuse 3 schließt sich ein über die Höhe der Wandung des Topfes 2 sich erstreckendes Griffteil 5 aus ebenfalls temperaturbeständigen Kunststoff an. Dem Griffteil 5 gegenüberliegend weist der Edelstahltopf 2 eine Schnaube 6 auf. Die obere Öffnung des Topfes 2 ist durch einen Deckel 7 verschließbar, der über ein Scharnier an dem Griffteil 5 befestigt ist.

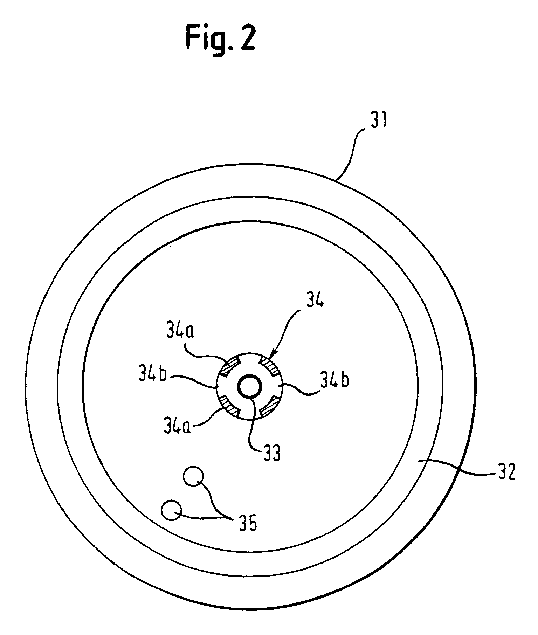

Das Bodengehäuse 3 weist eine Bodenplatte 31 auf, in der mittig eine Einbuchtung 32 vorgesehen ist. In dieser Einbuchtung 32 der Bodenplatte 31 des Wasserkochers 1 ist, wie insbesondere auch die Draufsicht in Fig. 2 zeigt, mittig eine Buchse 33 angeordnet, die vorzugsweise als Schutzleiterkontakt dient. Konzentrisch um die Buchse 33 herum sind mehrere Führungs- und Rastelemente 34 als Stege 34a und Ausnehmungen 34b ausgebildet.

Weiterhin sind auf konzentrischen Kreisen um die zentrale Buchse 33 und die Führungsund Rastelemente 34 herum zwei Kontaktstifte 35 zur Stromaufnahme angeordnet. Die Buchse 33, die Führungs- und Rastelemente 34 und die Kontaktstifte 35 in der Einbuchtung 32 der Bodenplatte 31 sind, wie auch Fig. 1 zeigt, so angeordnet, daß sie nicht über die Bodenplatte 31 hinausstehen, um ein Aufsetzen des Bodengehäuses 3 auf einer ebene Fläche nicht zu behindern.

Die Buchse 33 und die Kontaktstifte 34 sind an ein Steuereinheit 36 angeschlossen, die mit einem Rohrheizkörper 37 verbunden ist. Der Rohrheizkörper 37 sitzt auf einer Diffusorplatte 38, die wiederum mit dem Boden des Edelstahltopfes 2 verlötet ist. Die Steuereinheit 36 regelt das An- und Abschalten des Rohrheizkörper 37 und damit den Heizvorgang des Wasserkochers 1.

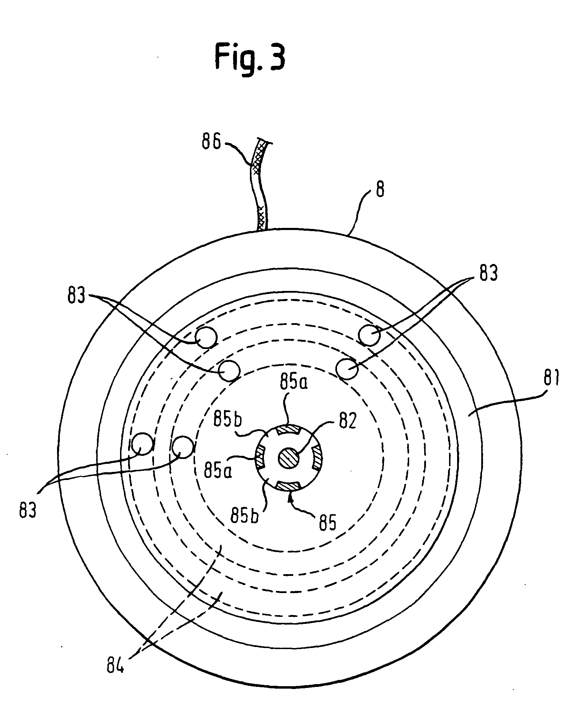

Zum Anschluss des Wasserkocher 1 an das Stromnetz kann dieser mit seiner Bodenplatte 31 auf ein Sockelteil 8 aufgesetzt werden, das einen zur Einbuchtung 32 korrespondierenden Aufsatz 81 aufweist. Fig. 3 zeigt eine Draufsicht auf das Sockelteil 8 des Wasserkochers 1.

Im Aufsatz 81 des Sockelteils 8 ist ein Mittelkontakt 82 vorgesehen, der zur Aufnahme und elektrischen Kontaktierung der Buchse 33 in der Bodenplatte 31 dient. Um den zentralen Mittelkontakt 82 herum sind auf konzentrischen Kreisen jeweils paarweise mehrere Aufnahmeöffnungen 83 in dem Aufsatz 81 des Sockelteils 8 ausgebildet.

Wie weiterhin aus der Fig. 3 ersichtlich ist, sind unterhalb der Aufnahmeöffnungen 83 als ringförmige elektrische Kontaktbahnen ausgebildete Kontaktflächen 84 angeordnet. Die Aufnahmeöffnungen 83 sowie die zugehörigen Kontaktbahnen 84 dienen zur Aufnahme und elektrischen Kontaktierung der beiden Kontaktstifte 35, die in der Einbuchtung 32 der Bodenplatte 31 angeordnet sind und die in der auf das Sockelteil 8 aufgesetzten Kontaktposition in zwei der Aufnahmeöffnungen 83 eintauchen. Die Aufnahmeöffnungen 83 zur Aufnahme der Kontaktstifte 35 sind immer paarweise angeordnet, um als elektrischer Kontakt für beide Pole der Netzspannung zu dienen. Die Mittelkontakt 82 und die Kontaktflächen 84 im Aufsatz 81 des Sockelteils sind weiterhin an ein Stromkabel 86 angeschlossen.

Während in Fig. 3 nur drei Paare von Aufnahmeöffnungen 83 dargestellt sind, können selbstverständlich beliebig viele Aufnahmeöffnungspaare 83 in dem Sockelteil 8 ausgebildet werden. Deren Anzahl wird lediglich durch die Stabilität der mit den Aufnahmeöffnungen 83 versehenen Oberseite des Sockelteils 8 begrenzt. Die Ausbildung der Kontaktflächen 84 unterhalb der Aufnahmeöffnungen 83 als jeweils einstückige Kontaktbahnen 84 ist für die Ausbildung einer beliebigen Anzahl von Aufnahmeöffnungspaaren 83 vorteilhaft, da so sichergestellt ist, daß sich unter jeder Aufnahmeöffnung 83 auch jeweils eine Kontaktfläche 84 befindet.

Um sicherzustellen, daß die in die Aufnahmeöffnungen 83 eintauchenden Kontaktstifte 33 im Bodengehäuse 3 auch elektrisch kontaktierend mit den Kontaktbahnen 84 in Kontakt treten, werden die Kontaktbahnen 84 über nicht dargestellte Federn nach oben gegen die eintauchenden Kontaktstifte gedrückt.

Das exakte Aufsetzen des Bodengehäuses 3 auf dem Sockelteil 8, also das Aufsetzen nur in einer Kontaktierposition wird bei der dargestellten Ausführungsform eines Sockelteil 8 dadurch erleichtert, daß konzentrisch um den Mittelkontakt 82 mehrere Führungsund Rastelemente 85 angeordnet sind, die mit den entsprechenden Führungs- und Rastelementen 34 korrespondieren, die um die Buchse 33 herum am Bodengehäuse 3 angeordnet sind. Durch die als Stege 85a und Ausnehmungen 85b ausgebildeten Führungsund Rastelemente 85 am Sockelteil 8, die in Anzahl und Anordnung den Stegen 34a und Ausnehmungen 34b der Führungs- und Rastelemente 34 im Bodengehäuse 3 entsprechen, kann das Bodengehäuse 3 nur in bestimmten Positionen auf das Sockelteil 8 aufgesetzt werden. In jeder dieser durch die Führungs- und Rastelemente 34, 85 vorgegebenen Aufsetzpositionen stimmen die beiden Kontaktstifte 35 am Bodengehäuse 3 genau mit der Anordnung von zwei Aufnahmeöffnungen 83 im Sockelteil 8 überein, so daß jedes Aufsetzen des Bodengehäuses 3 auf das Sockelteil 8 auch zu einer ordnungsgemäßen elektrischen Kontaktierung führt.

Alternativ zu der gezeigten Ausführungsform besteht auch die Möglichkeit, die Aufnahmeöffnungen statt im Sockelteil in der Bodenplatte am Oberteil des Wasserkochers auszubilden. Bei einer solchen Ausführungsform wären dann die zwei Kontaktstifte am Sockelteil ausgeführt. Weiterhin besteht die Möglichkeit, statt einer elektrischen Kupplung über Kontaktstifte und Aufnahmeöffnungen, auch anders ausgestaltete elektrische Buchsen und Steckelemente zu verwenden, wobei am Ober- und/oder am Sockelteil des Wasserkochers dann immer mehrere verteilt angeordnete Buchsen und/oder Steckerelemente angeordnet wären.

Ein solchermaßen ausgestaltetes elektrisches Haushaltsgerät zeichnet sich dadurch aus, daß sich bei einfachem und kostengünstigem Aufbau eine auch in der Handhabung für den Benutzer einfache Möglichkeit zur Mehrfachkontaktierung ergibt.

## Patentansprüche

1. Elektrisches Haushaltsgerät, insbesondere Wasserkocher, mit einem Sockelteil (8) und einem von dem Sockelteil (8) abnehmbaren Oberteil (2, 3), wobei Sockelteil (8) und Oberteil (2, 3) im zusammengesetzten Zustand über eine Kontakteinrichtung (35, 83) miteinander elektrisch kontaktierbar sind und die Kontakteinrichtung eine Mehrzahl von Kontaktelementen (35, 83) aufweist, die am Sockelteil (8) und/oder am Oberteil (2, 3) verteilt angeordnet sind, **dadurch gekennzeichnet, daß** im Sockelteil (8) eine Mehrzahl von paarweise angeordneten Aufnahmeöffnungen (83) zur Aufnahme von zwei an der Unterseite (31) des Oberteils (2, 3) angeordneten Kontaktstiften (35) ausgebildet sind und daß im Sockelteil (8) unterhalb einer jeden Aufnahmeöffnung (83) Kontaktflächen (84) zur elektrischen Kontaktierung angeordnet sind.

2. Elektrisches Haushaltsgerät nach Anspruch 1, **dadurch gekennzeichnet, daß** die paarweise angeordneten Aufnahmeöffnungen (83) auf konzentrischen Kreisen um einen Mittelkontakt (83) ausgebildet sind.

3. Elektrisches Haushaltsgerät nach Anspruch 2, **dadurch gekennzeichnet, daß** der Mittelkontakt (83) als Schutzleiterkontakt ausgebildet ist.

4. Elektrisches Haushaltsgerät nach Anspruch 2 oder 3, **dadurch gekennzeichnet, daß** die unterhalb der Aufnahmeöffnungen (83) angeordneten Kontaktflächen (84) als ringförmige Kontaktbahnen (84) ausgebildet sind.

5. Elektrisches Haushaltsgerät nach mindestens einem der Ansprüche 1 bis 4, **dadurch gekennzeichnet, daß** die unterhalb der Aufnahmeöffnungen (83) angeordneten Kontaktflächen (84) derart federnd gelagert sind, daß sie gegen die in die Aufnahmeöffnungen (83) eintauchenden Kontaktstifte (35) des Oberteils (2, 3) drücken.

6. Elektrisches Haushaltsgerät nach mindestens einem der Ansprüche 1 bis 5, **dadurch gekennzeichnet, daß** konzentrisch um den Mittelkontakt (82) Führungsund Rastelemente (85) angeordnet sind, die mit entsprechenden Führungs- und Rastelementen (34) an der Unterseite (31) des Oberteils (2, 3) korrespondieren.

## Claims

1. Electrical domestic appliance, particularly a kettle, with a base part (8) and an upper part (2, 3) removable from the base part (8), wherein base part (8) and upper part (2, 3) in the assembled state are electrically contactable with one another by way of a contact device (35, 83) and the contact device comprises a plurality of contact elements (35, 83), which are arranged in distribution at the base part (8) and/or at the upper part (2, 3), **characterised in that** a plurality of receiving openings (83), which are arranged in pairs, for reception of two contact pins (35) arranged at the underside (31) of the upper part (2, 3) are formed in the base part (8) and that contact surfaces (84) for electrical contact-making are arranged in the base part (8) below each receiving opening (83).

2. Electrical domestic appliance according to claim 1, **characterised in that** the receiving openings (83) arranged in pairs are formed on concentric circles about a centre contact (83).

3. Electrical domestic appliance according to claim 2, **characterised in that** the centre contact (83) is constructed as an earth conductor contact.

4. Electrical domestic appliance according to claim 2 or 3, **characterised in that** the contact surfaces (84) arranged below the receiving openings (83) are constructed as annular contact tracks (84).

5. Electrical domestic appliance according to at least one of claims 1 to 4, **characterised in that** the contact surfaces (84) arranged below the receiving openings (83) are resiliently mounted in such a manner that they press against the contact pins (35), which dip into the receiving openings (83), of the upper part (2, 3).

6. Electrical domestic appliance according to at least one of claims 1 to 5, **characterised in that** guide and detent elements (85) are arranged concentrically around the centre contact (82) and correspond with corresponding guide and detent elements (34) at the underside (31) of the upper part (2, 3).

## Revendications

1. Appareil électroménager, en particulier bouilloire, doté d'une partie de socle (8) et d'une partie supérieure (2, 3) qui peut être enlevée de la partie de socle (8), la partie de socle (8) et la partie supérieure (2, 3) pouvant être mises en contact électrique mutuel par l'intermédiaire d'un dispositif (35, 83) de mise en contact lorsqu'elles sont assemblées, le dispositif de mise en contact présentant une pluralité d'éléments de contact (35, 83) qui sont répartis sur la partie de socle (8) et/ou sur la partie supérieure (2, 3), **caractérisé en ce qu'**une pluralité d'ouvertures de réception (83), disposées par paires dans la partie de socle (8), sont réalisées pour recevoir deux fiches de contact (35) disposées sur la face inférieure (31) de la partie supérieure (2, 3) et **en ce que** des surfaces de contact (84) qui assurent le contact électrique sont disposées dans la partie de socle (8) en dessous de chaque ouverture de réception (83).

2. Appareil électroménager selon la revendication 1, **caractérisé en ce que** les ouvertures de réception (83) disposées par paires sont formées sur des cercles concentriques par rapport à un contact central (83).

3. Appareil électroménager selon la revendication 2, **caractérisé en ce que** le contact central (83) est configuré comme contact pour un conducteur de protection.

4. Appareil électroménager selon les revendications 2 ou 3, **caractérisé en ce que** les surfaces de contact (84) disposées en dessous des ouvertures de réception (83) sont configurées sous la forme de pistes annulaires de contact (84).

5. Appareil électroménager selon au moins l'une des revendications 1 à 4, **caractérisé en ce que** les surfaces de contact (84) disposées en dessous des ouvertures de réception (83) sont montées élastiquement de manière à repousser les tiges de contact (35) de la partie supérieure (2, 3) qui s'enfoncent dans les ouvertures de réception (83).

6. Appareil électroménager selon au moins l'une des revendications 1 à 5, **caractérisé en ce que** des éléments (85) de guidage et d'accrochage élastique sont disposés concentriquement autour du contact central (82) et correspondent à des éléments (34) de guidage et d'encliquetage prévus sur la face inférieure (31) de la partie supérieure (2, 3).
